(19) Europäisches Patentamt / European Patent Office / Office européen des brevets

(11) EP 1 912 086 A1

(12) EUROPEAN PATENT APPLICATION
published in accordance with Art. 153(4) EPC

(43) Date of publication:
16.04.2008 Bulletin 2008/16

(51) Int Cl.:
G02B 7/08 (2006.01)   G02B 7/02 (2006.01)
H04N 5/225 (2006.01)

(21) Application number: 06781112.5

(22) Date of filing: 14.07.2006

(86) International application number:
PCT/JP2006/314038

(87) International publication number:
WO 2007/015359 (08.02.2007 Gazette 2007/06)

(84) Designated Contracting States:
DE FI FR GB

(30) Priority: 04.08.2005 JP 2005226778

(71) Applicant: MATSUSHITA ELECTRIC INDUSTRIAL
CO., LTD.
Osaka 571-8501 (JP)

(72) Inventors:
• KATO, Akihiko
c/o Matsushita Elec. Ind. Co., Ltd.
Chuo-ku, Osaka-shi, Osaka, 540-6207 (JP)

• KIKUCHI, Norihiko
c/o Matsushita Elec. Ind. Co. Ltd.
Chuo-ku, Osaka-shi, Osaka, 540-6207 (JP)
• KUSAKARI, Takashi
c/o Matsushita Elec. Ind. Co., Ltd.
Chuo-ku, Osaka-shi, Osaka, 540-6207 (JP)

(74) Representative: Pautex Schneider, Nicole
Véronique et al
Novagraaf International SA
25, avenue du Pailly
1220 Les Avanchets - Geneva (CH)

(54) **IMAGING DEVICE AND PORTABLE TERMINAL WITH THIS**

(57)     It is an object of the present invention to provide an imaging device that can be reduced in production cost in comparison with the conventional imaging device, and a portable terminal provided with the imaging device. The imaging device **10** comprises a lens **11** for focusing light from an object, a magnet **12** attached to the lens **11**, lens moving means **13** for moving the lens **11** along an optical axis of the lens **11**, a hall element **14** for detecting a magnetic flux generated by the magnet **12**, a constant current circuit **15** for driving the hall element **14**, an amplifier **16** for amplifying an output voltage of the hall element **14**, a comparator **17** for comparing a reference voltage with the output voltage of the hall element **14**, a PWM signal producing unit **18** for producing a pulse width modulation signal, a lens controller **19** for outputting a control signal to the lens moving means **13** to control the lens moving means **13**, and a lens driver **20** for driving the lens moving means **13**.

FIG. 1

**Description**

Technical Field of the Invention

The present invention relates to an imaging device and a portable terminal provided with the imaging device.

Description of the Dependent Art

In recent years, there has been introduced on the market a wide variety of mobile phones each having an imaging device offering two millions or more pixels with progressed image compression technology and advanced imaging sensor. The imaging device of this type has an autofocusing mechanism, an automatic white balance adjusting mechanism, an automatic iris adjusting mechanism and the like.

The autofocusing mechanism can focus a lens on an object by automatically moving the lens when a distance from the lens to the object is within an allowable range. On the other hand, the autofocusing mechanism cannot focus the lens on an object when a distance from the lens to the object is not within the allowable range. Therefore, it is necessary to control the autofocusing mechanism to allow the autofocusing mechanism to move the lens within the allowable range, and to prevent the lens from being moved beyond the allowable range, bumping against elements, and being damaged by elements mounted to the housing.

As an example of a method of detecting two limiting points collectively defining a range over which the lens functions in a normal manner, there has been known a method of detecting two limiting points by using a photointerrupter as shown in FIGS. **5 (a)** and **(b)** (see a patent document **1**). One of the limiting points is hereinafter referred to as "near end", while the other of the limiting points is hereinafter referred to as "infinite end".

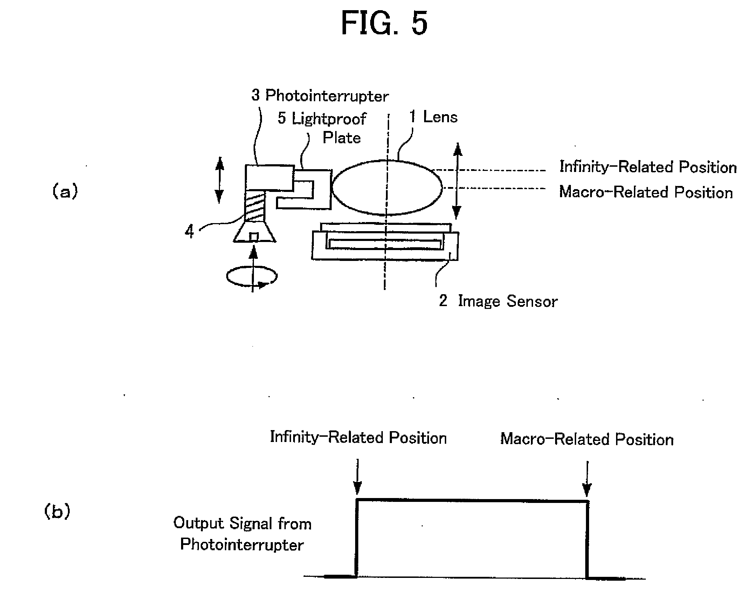

FIG. **5(a)** is a block diagram showing a conventional imaging device disclosed in a patent document **1**. FIG. **5 (b)** is a waveform chart showing an output signal to be outputted by a photointerrupter. As shown in FIG. **5(a),** the conventional imaging device comprises a lens **1,** an image sensor **2,** a photointerrupter **3,** a screw **4** for adjusting a position of the photointerrupter **3,** and a lightproof plate **5** attached to the lens **1.** When the lens **1** takes the near end or the infinite end, the lightproof plate **5** prevents the photointerrupter 3 from receiving a light.

In the conventional imaging device thus constructed, the lens **1** is moved with the lightproof plate **5.** When the lens **1** is about to move beyond an infinity-related position and a macro-related position, the lightproof plate **5** prevents the photointerrupter 3 from receiving a light and allows the photointerrupter **3** to output a signal indicative of "low" as shown FIG. **5(b).** Therefore, the conventional imaging device can detect whether or not the lens **1** is in the infinity-related position or the macro-related position under the condition that each of the infinity-related and macro-related positions is fixed as a position in which the output signal of the photointerrupter 3 is switched, in signal level, from "high" to "low". Patent document 1: Jpn. unexamined patent publication No. 2002-341226

Disclosure of the Invention

Problems to be solved by the Invention

The conventional imaging device, however, encounters such a problem that it is essential to adjust the position of the photointerrupter **3** by manually turning the screw **4** in assembling and adjusting stage by reason that the conventional imaging device is adapted to detect the limiting points of the lens **1** by using the photointerrupter **3** and the lightproof plate **5.** Accordingly, the conventional imaging device cannot be reduced in production cost.

It is, therefore, an object to provide an imaging device that can be reduced in production cost in comparison with the conventional imaging device, and a portable terminal provided with the imaging device.

Means for solving the Problems

The imaging device according to present invention comprises: a lens for focusing light from an object; lens moving means for moving the lens along an optical axis of the lens; magnetic flux generating means for generating a magnetic flux at a position corresponding to a current position of the lens; and position-related voltage outputting means for detecting the magnetic flux, and outputting a position-related voltage indicative of the current position of the lens.

The imaging device thus constructed as previously mentioned according to the present invention can be reduced in production cost in comparison with the conventional imaging device and improved in assembling and adjusting stage by reason that the position-related voltage outputting means is adapted to output a voltage indicative of the current position of the lens in response to the magnetic flux, and the lens moving means is adapted to move the lens along the optical axis of the lens on the basis of the voltage related to the current position of the lens.

The imaging device according to present invention may further comprise infinity-related position detecting means for detecting an infinity-related position on the basis of a first reference voltage and the position-related voltage, and macro-related position detecting means for detecting a macro-related position on the basis of a second reference voltage and the position-related voltage.

The imaging device thus constructed as previously mentioned according to the present invention can allow the infinity-related position detecting means to detect whether or not the current position of the lens is equal to an infinity-related position, and allow the macro-related position detecting means to detect whether or not the current position of the lens is equal to a macro-related position.

In the imaging device according to present invention, the lens moving means may be adapted to move the lens along the optical axis of the lens within a range defined by the infinity-related position and the macro-related position.

The imaging device thus constructed as previously mentioned according to the present invention can prevent the lens from being moved beyond the range intervening between the infinity-related position and the macro-related position, bumping against elements and being damaged by elements mounted to the housing by reason that the lens moving means is adapted to move the lens along the optical axis of the lens within a range defined by the infinity-related position and the macro-related position.

The imaging device according to present invention may further comprise pulse width modulation signal producing means for producing pulse width modulation signals different in duty ratio from each other, and reference voltage producing means for producing the first and second reference voltages by smoothing the pulse width modulation signals.

The imaging device thus constructed as previously mentioned according to the present invention can produce first and second reference voltages with ease by further comprising reference voltage producing means for producing the first and second reference voltages by smoothing the pulse width modulation signal.

In the imaging device according to the present invention, the position-related voltage to be produced by the position-related voltage outputting means is dependent on ambient temperature of the position-related voltage outputting means. The imaging device according to the present invention may further comprise temperature compensation means for performing temperature compensation of the position-related voltage in response to the ambient temperature of the position-related voltage outputting means.

The imaging device thus constructed as previously mentioned according to the present invention can allow the infinity-related position detecting means to detect whether or not the current position of the lens is equal to an infinity-related position, and allow the macro-related position detecting means to detect whether or not the current position of the lens is equal to a macro-related position with accuracy by further comprising temperature compensation means for compensating for changes of the conversion characteristics.

The imaging device according to the present invention further comprises chattering noise preventing means for preventing the infinity-related position detecting means from being affected by a chattering noise at the time of detecting the infinity-related position, and preventing the macro-related position detecting means from being affected by a chattering noise at the time of detecting the macro-related position.

The imaging device thus constructed as previously mentioned according to the present invention can allow the infinity-related position detecting means to detect whether or not the lens is in the infinity-related position, and allow the macro-related position detecting means to detect whether or not the lens is in the macro-related position without being affected by a chattering noise or other external noises.

The portable terminal according to the present invention comprises the above-mentioned imaging device.

The portable terminal thus constructed as previously mentioned according to the present invention can be reduced in production cost and improved in assembling and adjusting stage in comparison with the conventional portable terminal by reason that the position of the lens are automatically adjusted in assembling and adjusting stage.

Advantageous Effect of the Invention

The present invention can provide an imaging device which can be reduced in production cost and improved in assembling and adjusting stage in comparison with the conventional imaging device, and a portable terminal provided with the imaging device.

Brief Description of the Drawings

FIG. **1** is a block diagram showing a general constriction of an imaging device according to an embodiment of the present invention.
FIG. **2** is a circuit diagram showing one example of a circuit configuration of the imaging device according to the embodiment of the present invention.
FIG. **3(a)** is a circuit diagram showing a comparator and its surrounding elements of the imaging device according to the embodiment of the present invention. FIG. **3(b)** is a waveform chart showing a pulse width modulation (PWM) signal to be produced in the imaging device according to the embodiment of the present invention.

FIG. **4** is a waveform chart showing an example of an output voltage of a hall element to a position of a lens of the imaging device according to the embodiment of the present invention.

FIG. **5(a)** is a block diagram showing a general construction of a conventional imaging device. FIG. **5(b)** is a waveform chart showing an output signal of a photointerrupter of the conventional imaging device.

Explanation of the Reference Numerals

| | |
|---|---|
| **10:** | imaging device |
| **11:** | lens |
| **12:** | magnet (magnetic flux generating means) |
| **13:** | lens moving means |
| **14:** | hall element (position-related voltage outputting means) |
| **15:** | constant current circuit |
| **16:** | amplifier |
| **17:** | comparator (infinite position detecting means, macro position detecting means) |
| **17a:** | comparator (infinite position detecting means) |
| **17b:** | comparator (macro position detecting means) |
| **18:** | PWM signal unit (pulse width modulation generating means, reference voltage producing means) |
| **19:** | lens controller |
| **20:** | lens driver |
| **21:** | electric source terminal |
| **22:** | diode (temperature compensation means) |
| **23** to **25,** and **27** to **32:** | resister |
| **36:** | amplifier |
| **33:** | resister (reference voltage producing means) |
| **34:** | capacitor (reference voltage producing means) |
| **35:** | resister (reference voltage producing means) |
| **36:** | capacitor (reference voltage producing means) |

Description of the Preferred Embodiments

The embodiment of the imaging device according to the present invention will be described hereinafter with reference to accompanying drawings.

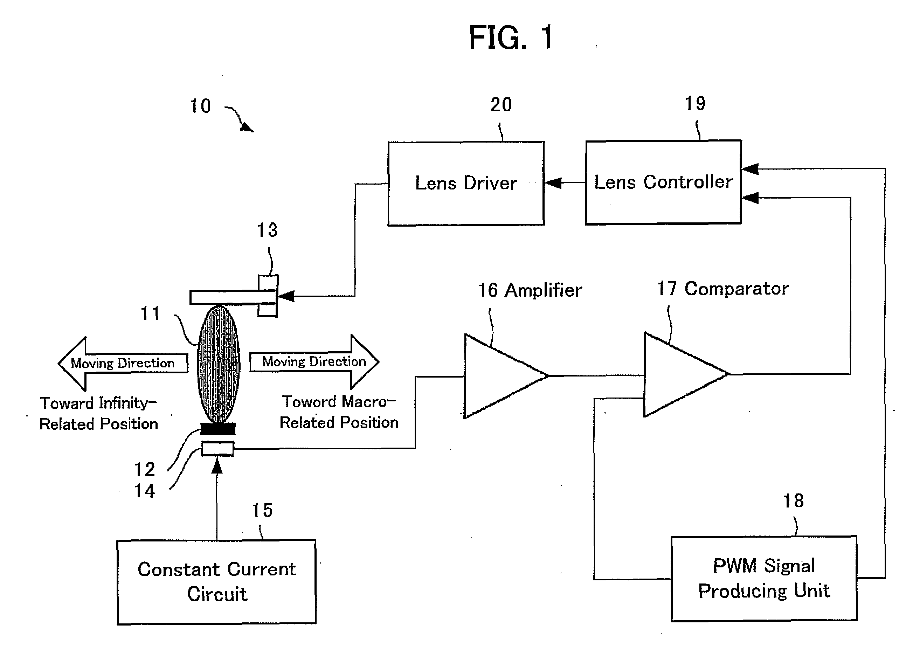

The following description is directed to the construction of the imaging device according to the embodiment of the present invention. FIG. 1 is a block diagram showing a general construction of the imaging device according to the embodiment of the present invention.

As shown in FIG. **1,** the imaging device **10** comprises a lens **11** for focusing light from an object, a magnet **12** attached to the lens **11,** lens moving means **13** for moving the lens **11** along an optical axis of the lens **11,** a hall element **14** for detecting a magnetic flax generated by the magnet **12,** a constant current circuit **15** for driving the hall element **14,** an amplifier **16** (hall amplifier) for amplifying an output voltage of the hall element **14,** a comparator **17** (hall comparator) for comparing a reference voltage with the output voltage of the hall element **14,** a PWM signal producing unit **18** for producing a pulse width modulation (hereinafter referred to as "PWM") signal, a lens controller **19** for controlling the lens moving means **13** by outputting a control signal to the lens moving means **13,** and a lens driver **20** for driving the lens moving means **13.**

Here, the magnet **12** functions as magnetic flux generating means, while the hall element **14** functions as position-related voltage outputting means.

The lens **11** is constituted by one or more lens made of plastic, glass, or the like. The magnet **12** is attached to, and fixed with respect to the lens **11**. However, the imaging device may further comprise, for example, a frame for retaining the lens **11**. The magnet **12** may be attached to, and fixed with respect to the frame.

The lens moving means **13** includes, for example, a piezoelectric element for moving the lens **11** between an infinity-related position and a macro-related position in response to an electric signal from the lens driver **20.**

The hall element **14** functions as a magneto-electric transducer on the basis of the Hall effect, while the constant current circuit **15** is adapted to drive the hall element **14** by applying a constant current "IC" to the hall element **14.** When the constant current circuit **15** supplies a constant current "IC" to the hall element **14,** and the magnet **12** produces a magnetic flax acting on the hall element **14** under the condition that the magnetic flux "B" is perpendicular in direction to the constant current "IC", the output voltage "VH" of the hall element **14** is represented by a follow relational expression.
$$VH = RH / d \times IC \times B \qquad (1)$$

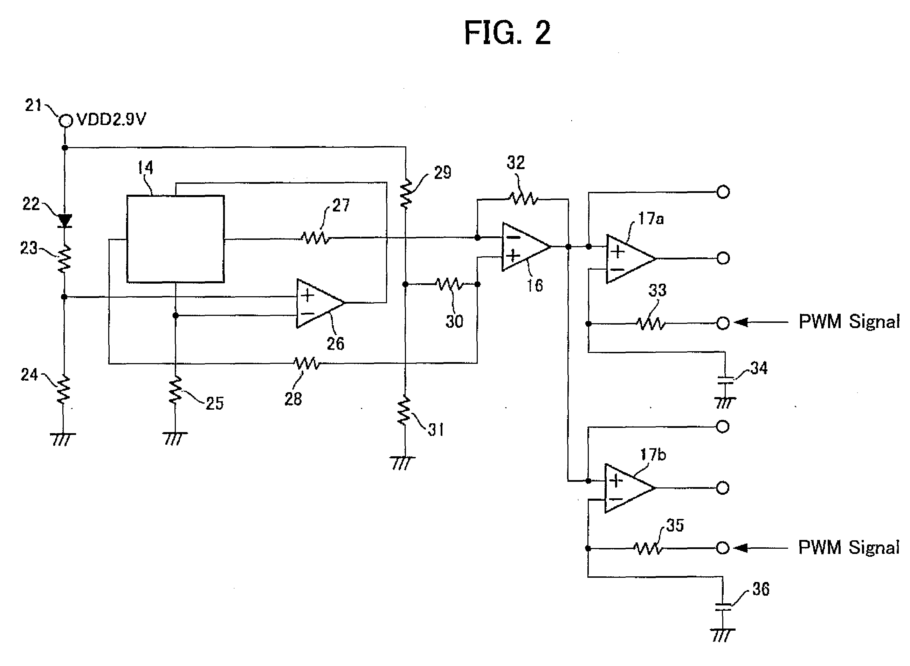

Here, legends "RH" and "d" are respectively intended to indicate a hall coefficient and a thickness of the hall element.
The hall element **14** attached to for example a housing is adapted to output a voltage in response to the magnetic flax from the magnet **12** attached to the lens **11,** the magnet **12** being movable together with the lens **11.** The magnetic flax to be detected by the hall element **14** is dependent on the current position of the lens **11** by reason that the magnet **12** is moved along the optical axis of the lens **11** with the lens **11.** Therefore, the hall element **14** can output, as a position-related voltage, a voltage related to the current position of the lens **11** in response to the magnetic in response to the magnetic flax from the magnet **12** attached to the lens **11.**
The amplifier **16** is adapted to amplify the output voltage of the hall element **14,** and to output the amplified voltage to the comparator **17.**
The comparator **17** is adapted to compare the voltage from the amplifier **16** with the reference voltage from the PWM signal producing unit **18,** and to output a signal useful for judging whether or not the lens **11** is about to move beyond an infinity-related position, and whether or not the lens **11** is about to move beyond a macro-related position.
The PWM signal producing unit **18** and the lens controller **19** are constituted by, for example, a digital signal processor (hereinafter simply referred to as "DSP"). The PWM signal producing unit **18** is adapted to output a signal produced as a reference voltage to the comparator **17,** and to output a signal useful in allowing the lens driver **20** to drive the lens **11.** Here, the reference voltage to be outputted by the PWM signal producing unit 18 is adjustable by, for example, a variable register, a program, or the like. The PWM signal producing unit **18** is constituted as pulse width modulation signal producing means of the imaging device according to the present invention.
The lens controller **19** is adapted to output a control signal useful in driving the lens **11** to the lens driver **20** in response to the output signal of the comparator **17.** More specifically, the lens controller **19** is adapted to produce a control signal useful in moving the lens **11** within a range defined by the infinity-related position and the macro-related position.
The lens driver **20** is adapted to output an electric signal useful in driving the lens moving means **13** on the basis of the control signal from the lens controller **19.**
As an example of the circuit configuration of the hall element **14,** the constant current circuit **15,** the amplifier **16,** and the comparator **17** will be then described hereinafter with reference to FIG. **2.**
As shown in FIG. **2,** the imaging device has a power supply terminal **21** to which a power supply voltage VDD of, for example, 2.9 [volt] is applied. The constant current circuit **15** (see FIG. 1) includes a diode **22,** resisters **23** to **25,** and an amplifier (hall amplifier) **26.** The constant current circuit **15** is adapted to supply a constant current to the hall element **14.**
The diode **22** is adapted to perform temperature compensation of the output voltage of the hall element **14** on the basis of the ambient temperature. The hall element **14** has a negative temperature characteristic that the output voltage is reduced in response to the increased ambient temperature. On the other hand, a forward voltage drop of the diode **22** is reduced in response to the increased ambient temperature. A voltage into which the source voltage VDD is divided by the resisters **23** and **24,** i.e., a voltage of a noninverting terminal of the amplifier **26** is increased when the forward voltage drop of the diode **22** is reduced by the increased ambient temperature. As a result, an input current of the hall element **14** increased, and the output voltage of the hall element **14** is increased. Therefore, the diode **22** can perform temperature compensation of the output voltage of the hall element **14.** Here, the diode **22** functions as temperature compensation means.
The output voltage of the hall element **14** is applied to an inverting terminal and a non-inverting terminal of the amplifier **16** through registers **27** and **28,** while a half of the source voltage "VDD" is applied as a bias voltage to the non-inverting terminal of the amplifier **16** through registers **29** and **31.**
The output terminal of the amplifier **16** is electrically connected to the non-inverting terminal of the amplifier **16** through a register **32.** The gain "α" of the amplifier **16** is characterized by a ratio of a register **32** to a register **27.** The amplifier **16** is adapted to amplify the signal from the hall element **14** on the basis of the gain "α", and to output the amplified signal to the comparators **17a** and **17b.**
As shown in FIG. **1,** the comparator **17** is constituted by comparators **17a** and **17b.** The comparator **17a** is useful in detecting the infinity-related position, while the comparator **17b** is useful in detecting the macro-related position. The comparators **17a** and **17b** are respectively constituted as infinity-related position detecting means and macro-related position detecting means of the imaging device according to the present invention.

The inverting terminal of the comparator **17a** is electrically connected to a register **33** and a capacitor **34,** while the inverting terminal of the comparator **17b** is electrically connected to a register **35** and a capacitor **36**. The comparator **17a** is adapted to receive the PWM signal through the register **33**, while the comparator **17b** is adapted to receive the PWM signal through the register **35.**

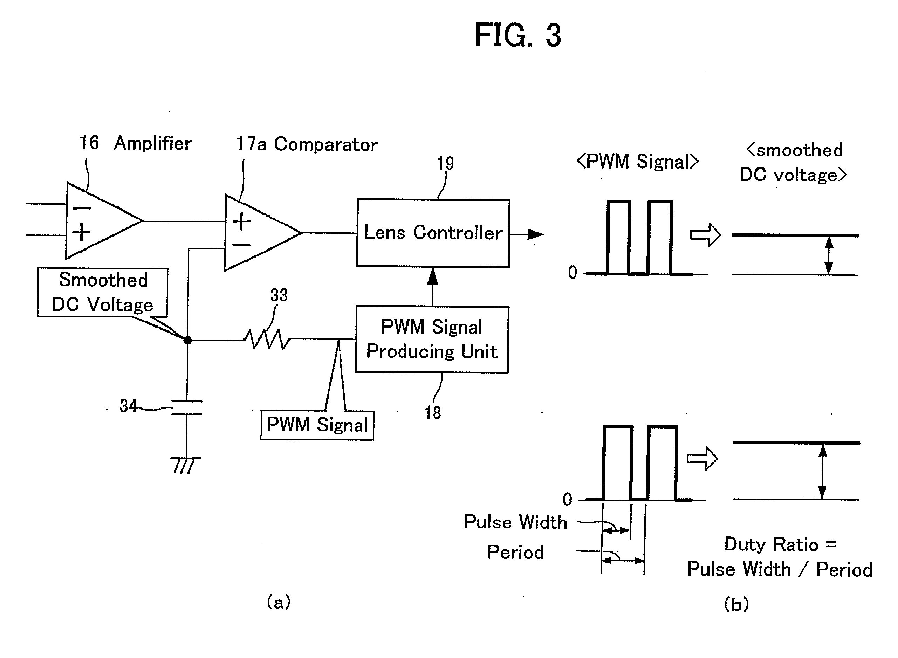

The PWM signal will be then described hereinafter with reference to FIG. **3**. FIG. **3(a)** is a diagram showing the comparator **17a** and its surrounding elements. FIG. **3(b)** is a waveform chart showing the PCM signal.

As shown in FIG. **3(a),** the resister **33** and the capacitor **34** are collectively constituted as a smoothing circuit for to producing a direct voltage to be outputted as a first reference voltage to the inverting terminal of the comparator **17a** by smoothing the PWM signal produced by the PWM signal producing unit **18.** As shown in FIG. **3(b),** a direct voltage defined as a first reference voltage can be changed with a duty ratio (of a pulse width to a period) when, for example, the duty ratio is changed from a waveform shown in an upper side of FIG. **3(b)** to a waveform shown in a lower side of FIG. **3(b).** When, for example, a frequency of the PWM signal is changed, the direct voltage defined as a first reference voltage can be changed with more sufficient accuracy.

Additionally, the resister **33,** the capacitor **34,** and the PWM signal producing unit 18 are collectively constituted as reference voltage producing means. The comparator **17a** may have a masking circuit (chattering noise canceling means) for digitally canceling a chattering noise when comparing the signal from the amplifier 16 and the first reference voltage.

As shown in FIG. **3,** the comparator **17b** and its surrounding circuit are substantially the same in construction as the comparator **17a** and its surrounding circuit. As shown in FIG. **2,** the PWM signal producing unit **18** is adapted to produce and output a pulse width modulation signal (PWM signal) to a smoothing circuit including a resister **35** and a comparator **17b,** while the smoothing circuit is adapted to produce a direct voltage as a second reference voltage by smoothing the PWM signal from the PWM signal producing unit **18,** and output the direct voltage to a negative terminal of a comparator 17b.

Here, the comparator **17b** may have a masking circuit for digitally canceling a chattering noise before comparing the signal from the amplifier **16** and the first reference voltage. Here, the resister **35,** the capacitor **36,** and the PWM signal producing unit **18** are collectively constituted as reference voltage producing means.

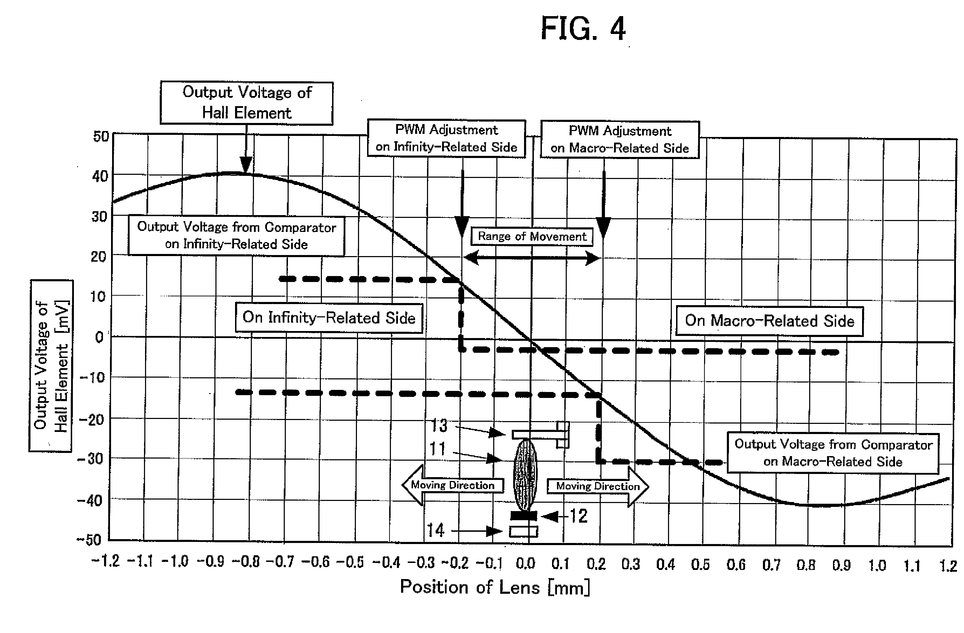

The following description is directed to a method of adjusting the first and second reference voltages. FIG. 4 is a waveform chart showing an example of an output voltage of the hall element **14** to a position of the lens unit **11** of the imaging device **10** according to the embodiment of the present invention. A coordinate system is defined on an optical axis, while an origin of the coordinate system is defined by the infinity-related position and the macro-related position as a reference position. The infinity-related position is defined as being in a minus direction, while the macro-related position is defined as being in a plus direction.

As shown in FIG. **4,** the hall element **14** outputs a voltage of approximately 40 [mV] when the lens **11** is at a distance of 0.9 [mm] from the reference position in the minus direction. The output voltage of the hall element **14** is gradually decreased when the lens **11** is moved in a direction toward the macro-related position. The hall element **14** outputs a voltage of approximately - 40 [mV] when the lens **11** is at a distance of 0.9 [mm] from the reference position in the plus direction.

When, for example, the lens **11** is moved within a range of $\pm$ 0.2 [mm] defined by the infinity-related position and the macro-related position, an adjusting device adjusts one of the PMW signals from the PWM signal producing unit **18** in assembling and adjusting stage to ensure that the output signal of the comparator **17a** is inverted in signal level at a position of - 0.2 [mm], and adjust the other or the PWM signals from the PWM signal producing unit 18 in assembling and adjusting stage to ensure that the output signal of the comparator **17b** is inverted in signal level at a position of + 0.2 [mm].

From the foregoing description, it will be understood that the imaging device **10** according to the embodiment of the present invention can prevent the lens **11** and its surrounding elements from being moved beyond the range, bumping against elements and being damaged by elements mounted to the housing by reason that the imaging device can determine the infnity-related position and the macro-related position by adjusting the first and second reference voltages in assembling and adjusting stage.

The operation of the imaging device **10** according to the embodiment of the present invention will be then described hereinafter with reference to FIGS. **1** to **4.**

Firstly, the constant current circuit **15** produces a current to be supplied to the hall element **14** and drives the hall element **14** by supplying the current to the hall element **14.** Then, the hall element **14** generates a voltage in response to the magnetic flux generated by the magnet **12,** and outputs the voltage to the amplifier **16.** Then, the amplifier **14** amplifies the signal from the hall element **14.**

Then, the comparator **17a** produces a high level signal or a low level signal by comparing the signal amplified by the amplifier **16** with the first reference voltage, while the comparator **17b** produces a high level signal or a low level signal by comparing the signal amplified by the amplifier **16** with the second reference voltage.

When a signal to be used to have the lens **11** move to the infinity-related position or the macro-related position is outputted to the lens controller **19** from the PWM signal producing unit **18,** the lens controller **19** controls the lens driver **20** to ensure that the lens moving means **13** moves the lens **11** to the infinity-related position or the macro-related position. When the lens **11** is moved to the infinity-related position or the macro-related position, the magnet **12** is moved with the lens **11.** The output voltage of the hall element **14** is changed in response to the position of the magnet **12.** As a result, the signal to be inputted to each of the noninverting terminals of the comparators **17a** and **17b** is changed in response to the position of the magnet **12.**

The lens controller **19** monitors the output signals of the comparators **17a** and **17b.** When the output signal of the comparator **17a** or **17b** is inverted in signal level, the lens controller **19** makes a judgment that the lens **11** is about to move beyond the infinity-related position or the macro-related position, and stops the lens **11.**

From the foregoing description, it will be understood that the imaging device according to the embodiment of the present invention can be reduced in production cost and drastically improved in assembling and adjusting stage in comparison with the conventional imaging device by reason that the lens moving means **13** is adapted to have the lens **11** move over a range defined by the infinity-related position and the macro-related position specified by the comparators **17a** and **17b.**

The imaging device **10** according to the embodiment of the present invention can be small in construction in comparison with the conventional imaging device to be mounted on the conventional portable terminal by reason that it is not necessary to manually adjust an infinity-related position to be occupied by the lens and a macro-related position to be occupied by the lens in assembling and adjusting stage, and make space for adjustments.

When the imaging device **10** according to the embodiment of the present invention is applied to a portable terminal such as for example a mobile phone, the portable terminal can be improved in production cost and reduced in size in comparison with the conventional portable terminal.

In this embodiment, the magnet **12** functions as magnetic flux generating means for generating a magnetic flux. The hall element **14** functions as position-related voltage outputting means for outputting a voltage indicative of the current position of lens **11** by detecting the magnetic flux of the magnet **12.** However, the present invention is not limited to the combination of the magnet **12** and the hall element **14.** The imaging device according to the present invention may obtain the above-mentioned advantageous effects by comprising an element for generating a magnetic flux, and an element for outputting an electric signal in response to the magnetic flux.

Industrial Applicability of the Present Invention

As will be seen from the foregoing description, the imaging device according to the present invention has an advantageous effect in production cost, and is useful as an imaging device and a portable terminal provided with the imaging device.

**Claims**

1. An imaging device, comprising:

   a lens for focusing light from an object;
   lens moving means for moving said lens along an optical axis of said lens;
   magnetic flux generating means for generating a magnetic flux at a position corresponding to a current position of said lens; and
   position-related voltage outputting means for detecting said magnetic flux, and outputting a position-related voltage indicative of said current position of said lens.

2. An imaging device as set forth in claim 1, which further comprises infinity-related position detecting means for detecting an infinity-related position on the basis of a first reference voltage and said position-related voltage, and macro-related position detecting means for detecting a macro-related position on the basis of a second reference voltage and said position-related voltage.

3. An imaging device as set forth in claim 2, in which said lens moving means is adapted to move said lens along said optical axis of said lens within a range defined by said infinity-related position and said macro-related position.

4. An imaging device as set forth in claim 2 or claim 3, which further comprises pulse width modulation signal producing means for producing pulse width modulation signals different in duty ratio from each other, and reference voltage producing means for producing said first and second reference voltages by smoothing said pulse width modulation signals.

5. An imaging device as set forth in any one of claims 1 to 4, in which said position-related voltage to be produced by said position-related voltage outputting means is dependent on ambient temperature of said position-related voltage outputting means, and which further comprises temperature compensation means for performing temperature compensation of said position-related voltage in response to said ambient temperature of said position-related voltage outputting means.

6. An imaging device as set forth in any one of claims 2 to 5, which further comprises chattering noise preventing means for preventing said infinity-related position detecting means from being affected by a chattering noise at the time of detecting said infinity-related position, and preventing said macro-related position detecting means from being affected by a chattering noise at the time of detecting said macro-related position.

7. A portable terminal comprising an imaging device as set forth in any one of claims 1 to 6.

FIG. 1

# FIG. 2

EP 1 912 086 A1

# FIG. 3

16 Amplifier    17a Comparator

19

Lens Controller

Smoothed DC Voltage

33

PWM Signal Producing Unit

34

PWM Signal

18

(a)

<PWM Signal>

<smoothed DC voltage>

0

0

Pulse Width

Period

Duty Ratio = Pulse Width / Period

(b)

EP 1 912 086 A1

# FIG. 4

Output Voltage of Hall Element

PWM Adjustment on Infinity-Related Side

PWM Adjustment on Macro-Related Side

Output Voltage from Comparator on Infinity-Related Side

Range of Movement

On Infinity-Related Side

On Macro-Related Side

Output Voltage from Comparator on Macro-Related Side

Moving Direction

Moving Direction

Output Voltage of Hall Element [mV]

Position of Lens [mm]

EP 1 912 086 A1

# FIG. 5

(a)

3 Photointerrupter

5 Lightproof Plate

1 Lens

Infinity-Related Position

Macro-Related Position

4

2 Image Sensor

(b)

Infinity-Related Position

Macro-Related Position

Output Signal from Photointerrupter

## INTERNATIONAL SEARCH REPORT

| | International application No. |
|---|---|
| | PCT/JP2006/314038 |

A.   CLASSIFICATION OF SUBJECT MATTER
*G02B7/08*(2006.01)i, *G02B7/02*(2006.01)i, *H04N5/225*(2006.01)i

According to International Patent Classification (IPC) or to both national classification and IPC

B.   FIELDS SEARCHED

Minimum documentation searched (classification system followed by classification symbols)
G02B7/08, G02B7/02, H04N5/225

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 8-248292 A  (Canon Inc.),<br>27 September, 1996 (27.09.96),<br>Par. No. [0020]; Fig. 1<br>& US 5900995 A<br>column 8, line 63 to column 9, line 10;<br>Fig. 14<br>& KR 220533 B | 1<br>2,3,6<br>4 |
| Y | JP 5-150152 A  (Canon Inc.),<br>18 June, 1993 (18.06.93),<br>Par. Nos. [0041] to [0045]; Fig. 3<br>(Family: none) | 2,3,6 |
| Y | JP 2-7011 A  (Canon Inc.),<br>11 January, 1990 (11.01.90),<br>Page 4, upper left column, lines 1 to 5<br>(Family: none) | 6 |

☒   Further documents are listed in the continuation of Box C.        ☐   See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 October, 2006 (24.10.06) | 31 October, 2006 (31.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/314038

C (Continuation).   DOCUMENTS CONSIDERED TO BE RELEVANT

| Category* | Citation of document, with indication, where appropriate, of the relevant passages | Relevant to claim No. |
|---|---|---|
| A | JP 5-173051 A  (Konica Corp.),<br>13 July, 1993 (13.07.93),<br>Par. No. [0020]; Fig. 13<br>(Family: none) | 2,3 |
| A | JP 3-249630 A  (Minolta Camera Co., Ltd.),<br>07 November, 1991 (07.11.91),<br>Page 7, lower left column, line 1 to page 9,<br>upper right column, line 2; Fig. 8<br>(Family: none) | 2,3 |

Form PCT/ISA/210 (continuation of second sheet) (April 2005)

**INTERNATIONAL SEARCH REPORT**

| International application No. |
| --- |
| PCT/JP2006/314038 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:
    See the extra sheet.

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.: 1-4, 6

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2006/314038

Continuation of Box No.III of continuation of first sheet(2)

The matter common to the inventions of claims 1, 2, 3, 4, 6, the invention of claim 5, and the invention of claim 7 is "an imaging device characterized by comprising a lens for focusing light from a subject, lens moving means for moving the lens along the optical axis, magnetic flux generating means for generating a magnetic flux at a position corresponding to the lens position along the optical axis, and position voltage output means for outputting the position voltage indicating the lens position by capturing the magnetic flux".

However, the search has revealed that "the imaging device characterized by comprising a lens for focusing light from a subject, lens moving means for moving the lens along the optical axis, magnetic flux generating means for generating a magnetic flux at a position corresponding to the lens position along the optical axis, and position voltage output means for outputting the position voltage indicating the lens position by capturing the magnetic flux" is not novel since it is disclosed in document JP 8-248292 A (Canon Inc.), 27 September, 1996 (27.09.96), paragraph [0020], Figure 1.

Consequently, since "the imaging device characterized by comprising a lens for focusing light from a subject, lens moving means for moving the lens along the optical axis, magnetic flux generating means for generating a magnetic flux at a position corresponding to the lens position along the optical axis, and position voltage output means for outputting the position voltage indicating the lens position by capturing the magnetic flux" makes no contribution over the prior art, the common matter is not a special technical feature within the meaning of PCT Rule 13.2, second sentence.

Therefore, there is no matter common to the all the inventions of claims 1, 2, 3, 4, 6, claim 5, and claim 7.
Since there is no other common matter considered as a special technical feature within the meaning of PCT Rule 13.2, second sentence, no technical relationship among the different inventions within the meaning of PCT Rule 13.

Consequently, the inventions of claims 1, 2, 3, 4, 6, the invention of claim 5, and the invention of claim 7 do not obviously comply with the requirement of unity of invention.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002341226 A